# EUROPEAN PATENT APPLICATION

(11) **EP 1 758 235 A2**
(43) Date of publication of application: **28.02.2007**
(21) Application number: 06119588.9
(22) Date of filing: 25.08.2006
(51) Int. Cl.: H02M 3/07

(54) **Charge pump**

(30) Priority: 26.08.2005 US 711553 P
(71) Applicant: TPO Displays Corp., Miao-Li County (TW)
(72) Inventor: Lin, Hsiao-Yi, 300, Hsinchu (TW); Chiu, C.-M., 320, Jhongli City, Taoyuan County (TW); Chen, Wei-Cheng, 730, Sinying City, Tainan County (TW)
(74) Representative: Kewitz, Ansgar

(57) **Abstract**

A charge pump is disclosed, comprising a plurality of sub-charge pumps connected in series, each comprising a charging switch module turned on or off according to a charging clock signal and a capacitor connected between the charging switch module and a reference clock signal. The charge pump further comprises at least one additional switch module connecting to a reference-clock-providing sub-charge pump and a reference-clock-accepting sub-charge pump among the sub-charge pumps to provide the reference clock signal of the reference-clock-accepting sub-charge pump according to an additional clock signal.

## Description

### BACKGROUND OF THE INVENTION

### Field of the Invention

The invention relates to charge pumps such as can be used with panel displays.
**Description of the Related Art**

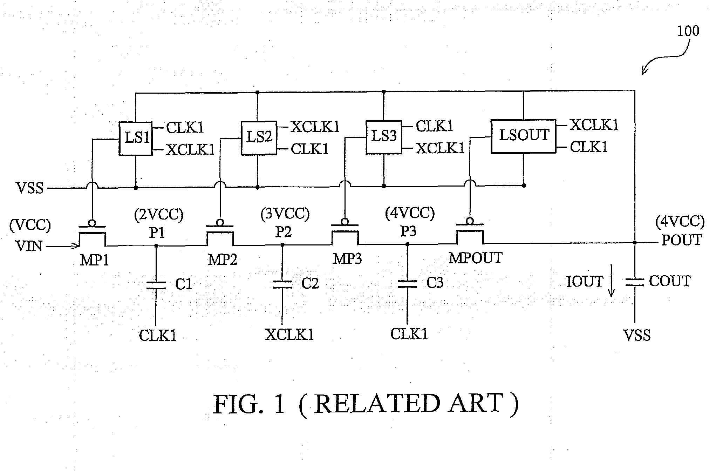

Fig. 1 is a schematic diagram of a conventional 3-stage (X4) charge pump 100. As shown in the figure, four PMOS transistors PM1-PM3 and PMOUT are connected in series, each respectively connecting to one end of a capacitor C1-C3 and COUT and controlled by a level shifter LS1-LS3 and LSOUT. The other end of the capacitors C1-C3 and COUT are respectively connected to clock signals CLK1, XCLK1, CLK1 and a reference voltage VSS, wherein the clock signals CLK1 and XCLK1 are equal in magnitude but of opposite phase. The clock signal CLK1 is also fed into a first input terminal of the first and third shifters LS1 and LS3, and into a second input terminal of the second and fourth shifters LS2 and LSOUT. Similarly, the clock signal XCLK1 is fed into a first input terminal of the second and fourth shifters LS2 and LSOUT, and into a second input terminal of the first and third shifters LS 1 and LS3. The charge pump 100 receives an input voltage VIN of amplitude VCC through the first PMOS transistor PM1 and outputs an output voltage VOUT through the fourth PMOS transistor PMOUT. The voltage VOUT also serves as a power supply for the level shifters LS1-LS3 and LSOUT. Typically, the amplitudes of CLK1 and XCLK1 are equal to that of VIN.

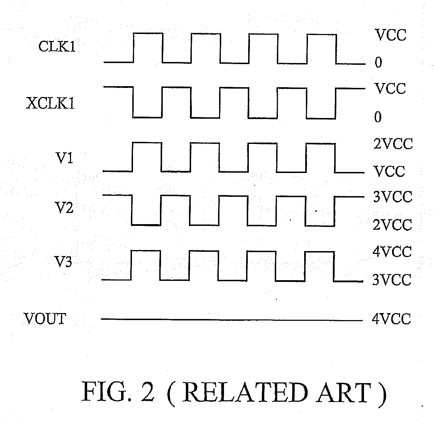

Fig. 2 is a timing diagram of the clock signals CLK1 and XCLK1, and the voltages V1-V3 and VOUT respectively at terminals P1-P3 and POUT, illustrating the operation of the charge pump 100. First, the power supply of each level shifter LS1 to LSOUT, or the voltage VOUT at the terminal POUT, is floated. However, even with a floating power supply, when CLK1 is low (0) and XCLK1 is high (VCC), the first level shifter LS1 outputs a low voltage (0) to turn on the first PMOS transistor MP1, allowing the input voltage VIN to charge the first capacitor C1. Accordingly, the voltage V1 at terminal P1 is charged to VCC.

Next, CLK1 turns to high (VCC) and XCLK1 turns to low (0). The first level shifter LS1 outputs a floating voltage due to the floated power supply, while the second level shifter LS2 outputs a low voltage (0) to turn on the second PMOS transistor MP2, allowing the voltage V1 at terminal P1 to charge the second capacitor C2. Accordingly, the voltage V1 at terminal P1 is pulled up from VCC to nearly 2VCC since CLK1 is increased by one VCC, which also charges the voltage V2 at terminal P2 to nearly 2VCC. As is explained below, the power supply is capable of turning off the first PMOS transistor MP1 with the increase of the voltage VOUT, and thus the voltages V1 and V2 are charged to 2VCC.

Next, CLK1 turns back to low (0) and XCLK1 turns back to high (VCC). This allows the first level shifter LS1 to turn on the first PMOS transistor MP1 and thus the input voltage VIN charges the first capacitor C1 again to pull the voltage V1 back down to VCC. Similarly, with the power supply floated, the second level shifter LS2 outputs a floating voltage, while the third level shifter LS3 outputs a low voltage (0) to turn on the third PMOS transistor MP3, allowing the voltage V2 at terminal P2 to charge the third capacitor C3. Accordingly, the voltage V2 at terminal P2 is pulled up from 2CC to nearly 3VCC since XCLK1 is increased by one VCC, which also charges the voltage V3 at terminal P3 to nearly 3VCC. As is explained below, the power supply is capable of turning off the second PMOS transistor MP2 with the increase of the voltage POUT, and thus the voltages V2 and V3 are charged to 3VCC.

Next, CLK1 turns back to high (VCC) and XCLK1 turns back to low (0). This allows the first and second level shifter LS 1 and LS2 to turn off and on the first and second PMOS transistors MP1 and MP2, respectively, pulling the voltage V1 and V2 back up to 2VCC again. Similarly, with the power supply floated, the third level shifter LS3 outputs a floating voltage, while the fourth level shifter LSOUT outputs a low voltage (0) to turn on the fourth PMOS transistor MPOUT, allowing the voltage V3 at terminal P3 to charge the fourth capacitor COUT. Accordingly, the voltage V3 at terminal P3 is pulled up from nearly 3CC to nearly 4VCC since CLK1 is increased by one VCC, which also charges the voltage V4 at terminal P4 to nearly 4VCC. As is explained below, the power supply is capable of turning off the third PMOS transistor MP3 with the increase of the voltage POUT, and thus the voltages V3 and VOUT are charged to 4VCC.

Next, CLK1 turns back to low (0) and XCLK1 turns back to high (VCC). Similar procedures continue in the three stages and are not detailed here. The only difference is that the voltage VOUT at terminal POUT is not increased but is maintained at nearly 4VCC since the capacitor COUT is connected to the reference voltage VSS rather than a clock signal. That is, the capacitor COUT and the level shifter LSOUT are used for AC to DC conversion rather than charge pumping as are the capacitors C1-C3 and level shifters LS1-LS3. With the increase of VOUT, the level shifters LS1-LS3 and LSOUT operate normally to turn off the respective PMOS transistors P1-P3 and POUT, generating more stabilized voltages V1-V3 and VOUT, as shown in Fig. 2.

In the charge pump 100, voltage is increased by one VCC at each stage. Thus, converting Vin of amplitude VCC to VOUT of amplitude 4VCC requires as many as three capacitors C1-C3 for charge pumping and one capacitor COUT for the last AC-DC conversion. For a low current circuit, it is relatively easy to integrate capacitors C1-C3 and COUT on glass. However, for higher operation current (i.e. exceeding 0.2mA), integration of capacitors C1-C3 and COUT is relatively difficult. Additionally, an external connected pumping capacitor occupies extra pins on an FPC (flexible printed circuit) especially for current well developed COG (chip on glass) type panels.
**BRIEF SUMMARY OF THE INVENTION**

An embodiment of a charge pump comprises a plurality of sub-charge pumps connected in series, each having an input terminal, an output terminal, and a reference clock terminal, the input terminal of each, except a first of the sub-charge pumps, connecting to the output terminal of an immediately preceding sub-charge pump in the series, the input terminal of the first sub-charge pump acting as an input terminal of the charge pump to receive an input voltage; and at least one additional switch module. Each of the sub-charge pumps comprises: a charging switch module coupled between the input terminal and output terminal of the sub-charge pump, operative to be turned on and off according to a charging clock signal; and a capacitor connected between the output terminal and the reference clock terminal of the sub-charge pump, and operative to receive a reference clock signal through the reference clock terminal. The least one additional switch module is coupled to the output terminal of a reference-clock-providing sub-charge pump among the sub-charge pumps, except a last of the sub-charge pumps in the series, and to the reference clock terminal of a reference-clock-accepting sub-charge pump among the sub-charge pumps , to provide a high level of voltage at the output terminal of the reference-clock-providing sub-charge pump as the high level of the reference clock signal of the reference-clock-accepting sub-charge pump.
Another embodiment of a charge pump comprises: a first, second, and third PMOS transistor connected in series; a first, second, and third level shifter, each connected between an output terminal of the charge pump and a reference voltage, receiving first, second and third clock signals to control the first, second and third PMOS transistors, respectively; a first, second, and third capacitor, the first capacitor having a first end connecting to the first clock signal and a second end connecting to the terminal at which the first and second PMOS transistors are connected, the second capacitor having a second end connecting to the terminal at which the second and third PMOS transistors are connected, and third capacitor having a first end connecting to the reference voltage and a second end connecting to the third PMOS transistor to act as the output terminal of the charge pump; and an additional level shifter, connected between the second end of the first capacitor and the reference voltage, receiving a third inverted clock signal of opposite phase to the third clock signal to control the voltage at a first end of the second capacitor.
Another embodiment of a charge pump comprises: a first sub-charge pump having a first output terminal and being operative to receive an input voltage such that the first sub-charge pump operates as an input terminal for the charge pump; a second sub-charge pump having a second input terminal, a second reference clock terminal and a second output terminal, the second input terminal being connected in series with the first output terminal; a third sub-charge pump having a third input terminal, a third reference clock terminal and a third output terminal, the third input terminal being connected in series with the second output terminal; and a switch module coupled to the second output terminal and to the third reference clock terminal such that a voltage provided at the second output terminal is provided as reference clock signal of the third sub-charge pump.
**BRIEF DESCRIPTION OF THE DRAWINGS**
The invention can be more fully understood by reading the subsequent detailed description and examples with references made to the accompanying drawings, wherein:

Fig. 1 is a schematic diagram of a conventional 3-stage charge pump;

Fig. 2 is a timing diagram showing typical clock signals and voltages in the charge pump of Fig.1;

Fig. 3 is a block diagram of an N-stage charge pump (N being an integer larger than two) (ONE?) in accordance with an embodiment of the invention;

Figs. 4A and 4B are a block diagram and schematic diagram of a 2-stage charge pump respectively for exemplary embodiments of the charge pump of Fig. 3;

Fig. 5 is a timing diagram showing typical clock signals and voltages in the charge pump of Fig.4B;

Fig. 6 shows an output voltage comparison between the charge pumps of Figs. 1 and 4B versus different load current IOUT;

Fig. 7 shows a power efficiency comparison between the charge pumps of Figs. 1 and 4B versus different load current IOUT;

Fig. 8 is a block diagram of a 3-stage charge pump in accordance with another embodiment of the invention as an extension of the charge pump Fig. 4B;

Fig. 9 is a block diagram of a 3-stage charge pump in accordance with another embodiment of the invention as another extension of the charge pump of Fig. 4B;

Fig. 10 is a timing diagram showing typical clock signals and voltages in the charge pump of Fig. 9;

Fig. 11 is a is a block diagram of a N-stage charge pump in accordance with another embodiment of the invention as an extension of the charge pump of Fig. 9;

Fig. 12 is a block diagram of a 3-stage charge pump in accordance with another embodiment of the invention as a variation of the charge pump of Fig. 4B;

Fig. 13 is a timing diagram showing typical clock signals and voltages in Fig. 12; and

Fig. 14 is a block diagram of a N-stage charge pump in accordance with another embodiment of the invention as an extension of the charge pump of Fig. 12.
**DETAILED DESCRIPTION OF THE INVENTION**

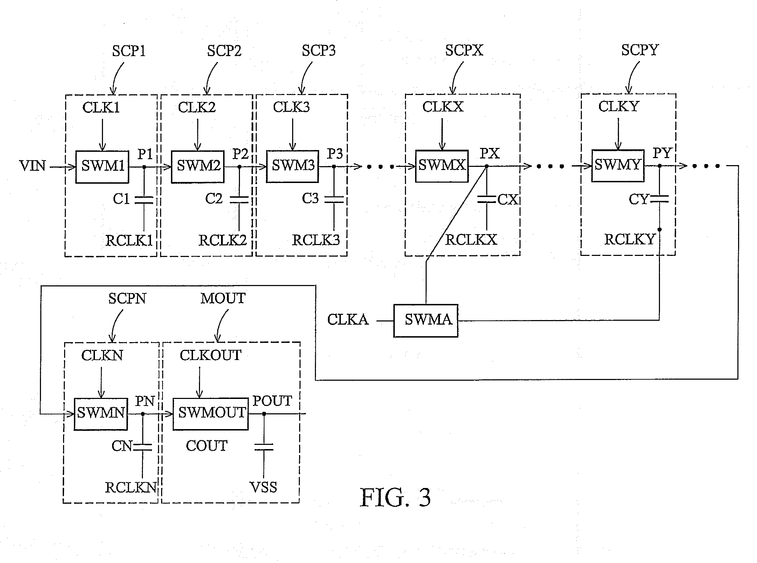

Fig 3 is a block diagram of an N-stage charge pump (N being an integer and N≥2) in accordance with an embodiment of the invention. As shown in the figure, a plurality of sub-charge pumps SCP1-SCPN and an output module MOUT are connected in series. Each of the sub-charge pumps SCP1-SCPN comprises respectively a charging switch module SWM1-SWMN connected respectively to a capacitor C1-CN, wherein the charging switch module SWM1-SWMN is turned on or off respectively according to a charging clock signal CLK1-CLKN. Similarly, the output module MOUT comprises an output charging switch module SWMOUT connected to a capacitor COUT, wherein the output charging switch module SWMOUT is turned on or off according to an output charging clock signal CLKOUT. Each of the capacitors C1-CN has a first end P1-PN acting as the output terminal of the sub-charge pump SCP1-SCPN connected to the next sub-charge pump SCP2-SCPN and output module MOUT respectively, and a second end connected to a reference clock signal RCLK1-RCLKN respectively. The capacitor COUT has a first end acting as an output terminal POUT of the charge pump 300 and a second end connected to a reference voltage VSS. An additional switch module SWMA is coupled between the output terminal PX of a reference-clock-providing sub-charge pump SCPX (1≤X<N) and the reference voltage VSS, and has an output terminal connecting to the second end of the capacitor CY of a reference-clock-accepting sub-charge pump SCPY behind the reference-clock-providing-sub-charge pump SCPX (2≤Y≤N and X<Y). The additional switch module SWMA is controlled by an additional clock signal CLKA to provide the voltage at the output terminal PX of the reference-clock-providing sub-charge pump SCPX or the reference voltage VSS as the reference clock signal RCLKY of the reference-clock-accepting sub-charge pump SCPY. The charge pump 300 receives a DC voltage VIN through the first charging switch module SWM1, and outputs another DC voltage VOUT higher than VIN through the first end of the capacitor COUT. Typically, the amplitude of the input voltage VIN, the amplitude of each of the reference clock signals RCLK1 to RCLKN and the charging clock signals CLK1 to CLKN, and the amplitude of CLKA are all equal to VCC.

To operate normally to convert voltage VIN to another voltage VOUT higher than VIN, various methods set timings of the reference clock signals RCLK1-RCLKN, the charging clock signals CLK1-CLKN, the output charging clock signal CLKOUT, and the additional clock signal CLKA. However, the various timing settings can be summarized into four simple rules. The first and second rules deal with the timing relationship between the reference clock signals RCLKZ (Z being an integer and 1≤Z≤N) and the charging clock signals CLKZ in the same sub-charge pump SCPZ. The third rule deals with the timing relationship between the reference clock signals RCLKZ in any of the sub-charge pumps SCPZ and the charging clock signals CLKW (W=Z+1) in the next sub-charge pump SCPW or the output charging clock signal CLKOUT in the output module MOUT next to the sub-charge pump SCPZ. The fourth rule deals with the timings of the additional clock signal CLKA and the reference clock signal RCLKX of the reference-clock-providing sub-charge pump SCPX.

With respect to the first rule, for the sub-charge pumps SCPZ (1 ≤ *Z* ≤ *N*), when the reference clock signal RCLZ is at low level, there exists one period during which the charging clock signal CLKZ turns on the charging switch module SWMZ. As such, the voltage at the first end of the capacitor CZ is charged by the voltage received through the charging switch module SWMZ.

With respect to the second rule, for the sub-charge pumps SCPZ (1≤ *Z* ≤ *N*), when the reference clock signal RCLZ is at high level, the charging clock signal CLKZ turns off the charging switch module SWMZ. As such, the charges stored by the capacitor SCPZ are kept from leaking through the charging switch module SWMZ and the voltage at the first end of the capacitor SCPZ is pulled up due to the increase of the reference clock RCLKZ.

With respect to the third rule, for any of the sub-charge pumps SCPZ (1 ≤ *Z* < *N*), when the reference clock signal RCLZ is at high level, there exists one period during which the charging clock signal CLKW (W=Z+1) of the sub-charge pump SCPW next to the sub-charge pump SCPZ turns on the charging switch module SWMW. For the last sub-charge pump SCPN (Z=N), when the reference clock signal RCLN is at high level, there exists one period during which the output charging clock signal CLKOUT of the output module MOUT turns on the output charging switch module SWMOUT. As such, the output voltage of each of the sub-charge pumps SCP1-SCPN is respectively transmitted to the next sub-charge pump SCP2-SPCN and the output module MOUT.

With respect to the fourth rule, when the reference clock signal RCLKX is at high level, there exists one period during which the additional clock signal CLKA drives the additional switch module SWMA to output the voltage VX at the output terminal PX of the reference-clock-providing sub-charge pump SCPX. Conversely, when the reference clock signal RCLKX is at low level, the additional clock signal CLKA drives the additional switch module SWMA to output the reference voltage VSS. As such, the high and low levels of the reference clock signal RCLKY of the reference-clock-accepting sub-charge pump SCPY are respectively the high level of the voltage at the terminal PX and the reference voltage VSS.

With the reference clock signal RCLKY provided by the additional switch module SWMA, the voltage at the output terminal PY is increased by the voltage at the output terminal PY of the charge pump SCPX, exceeding VCC shown in Figs. 1 and 2. Consequently, to obtain the same magnitude of the output voltage VOUT requires fewer capacitors. It should be noted that more than one additional switch module can be disposed to satisfy different design requirements.

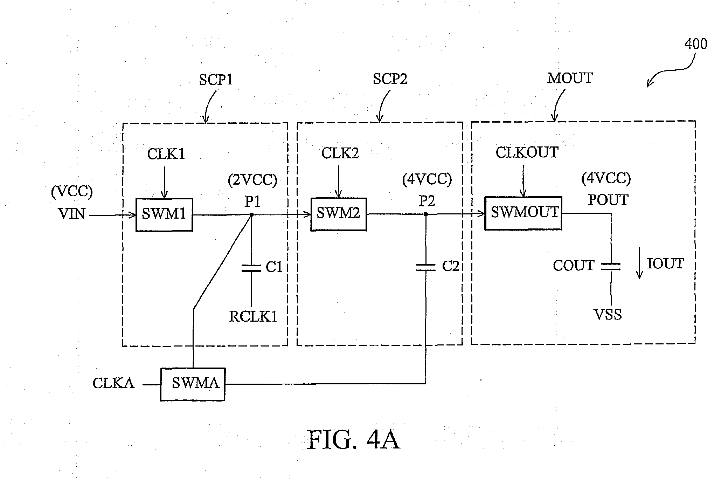

Fig. 4A is a block diagram of a 2-stage X2 (X2) charge pump of an exemplary embodiment of the charge pump of Fig. 3. As shown in Fig. 4A, the 2-stage charge pump 400 comprises a first charge pump SCP1 including a first charging switch module SWM1 connected to a first end P1 of a first capacitor C1, a second charge pump SCP2 including a second charging switch module SWM2 connected to a first end P2 of a second capacitor C2, an output module MOUT including an output charging switch module SWMOUT connected to a first end POUT of an output capacitor COUT, and an additional switch module SWMA connected between the first end P1 of the first capacitor C1 and a second end of the second capacitor C2. Second ends of the capacitors C1 and COUT receive a first reference signal RCLK1 and a reference voltage VSS respectively. The charging switch modules SWM1-SWM2 and the output charging module SWMOUT are respectively controlled by charging clock signals CLK1-CLK2 and an output charging clock CLKOUT. The additional switch module is controlled by an additional clock signal CLKA.

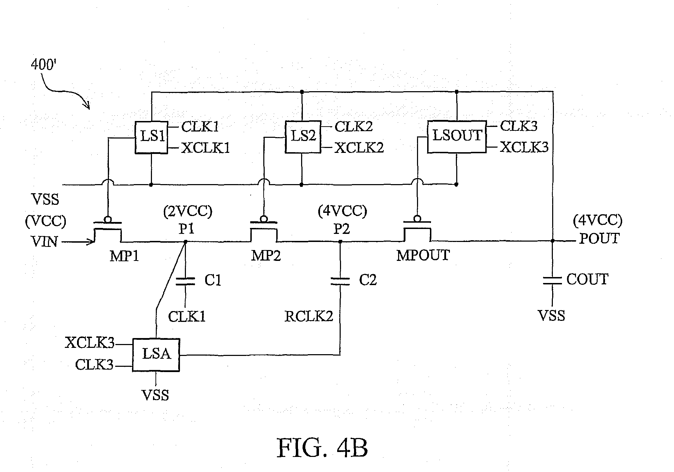

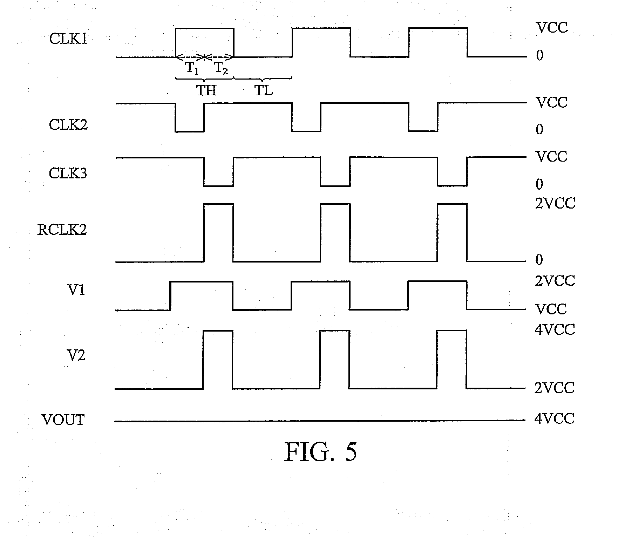

Detailed circuit and timings of CLK1-CLK2, CLKOUT, CLKA and RCLK1 of the charge pump in Fig. 4A are shown in Fig. 4B and Fig. 5 to illustrate operation and advantages. Referring to fig. 4B, the first charging switch module SWM1, the second charging switch module SWM2 and the output charging switch module SWMOUT include respectively a first PMOS transistor MP1 controlled by a first level shifter LS1, a second PMOS transistor MP2 controlled by a second level shifter LS2, and an output PMOS transistor MPOUT controlled by an output level shifter LSOUT, wherein the level shifters LS1, LS2 and LSOUT are all connected between the output terminal POUT of the charge pump 400' and the reference voltage VSS. The additional switch module SWMA includes an additional level shifter LSA connected between the output terminal P1 of the first sub-charge pump SCP1 and the reference voltage VSS with an output connected to the second end of the second capacitor C2.

In the embodiment of Fig. 4B, the first level shifter LS1 receives a first clock signal CLK1 and a first inverted clock signal XCLK1. Similarly, the second level shifter LS2 receives a second clock signal CLK2 and a second inverted clock signal XCLK2. Similarly, the output level shifter LSOUT receives a third clock signal CLK3 and a third inverted clock signal XCLK3. The inverted clock signals XCLK1-3 have the same magnitude as, but opposite phase to, the clock signals CLK1-3 respectively. The additional level shifter receives the third inverted clock signal XCLK3 and the third clock signal CLK3. The first clock signal CLK1 also serves as the first reference clock signal RCLK1 to input into the second end of the first capacitor C1. Effectively, the clock signals CLK1-3 respectively serve as the charging clock signals of the sub-charge pump SCP1-SP3 and XCLK3 serve as the additional charging clock signals. It should be noted that the level shifter LS1-LSOUT can be operated with only one input.

Fig. 5 is a timing diagram of the clock signals CLK1-CLK3, and the voltages V1, V2 and V3 at terminals P1, P2 and POUT respectively, to illustrate the operation of the charge pump 400'. As shown in the figure, in the period TL when the first charging clock signal CLK1 is at low level, both the charging clock signals CLK2 and CLK3 are high. And in the period TH when CLK1 is high, there first exists one period T1 during which CLK2 is at low level but CLK3 is at high level, and another period T2 during which CLK2 is at high level but CLK3 is at low level.

First, in period TL, the power supply of each of the level shifters LS1 to LSOUT, or the voltage VOUT at the terminal POUT, is floated. However, even with a floating power supply, when CLK1 is low (0) and both CLK2 and CLK3 are high (VCC), the first level shifter LS1 outputs a low voltage (0) to turn on the first PMOS transistor MP1, allowing the input voltage VIN to charge the first capacitor C1. Accordingly, the voltage V1 at terminal P1 is charged to VCC.

Next, in period T1, CLK1 turns to high, CLK2 turns to low, and CLK3 stays high. The first level shifter LS1 outputs a floating voltage with the power supply floated, while the second level shifter LS2 outputs a low voltage (0) to turn on the second PMOS transistor MP2, allowing the voltage V1 at terminal P1 to charge the second capacitor C2. Accordingly, the voltage V1 at terminal P1 is pulled up from VCC to nearly 2VCC since CLK1 is increased by one VCC, which also charges the voltage V2 at terminal P2 to nearly 2VCC. As is explained below, the power supply is capable of turning off the first PMOS transistor MP1 with the increase of the voltage POUT, and thus voltages V1 and VOUT are charged to 2VCC.

Next, in period T2, CLK1 stays high, CLK2 turns to high, and CLK3 turns to low. The high level of CLK1 maintains the voltage V1 at nearly 2VCC. Similarly, with the power supply floated, the second level shifter LS2 outputs a floating voltage, while the third level shifter LS3 outputs a low voltage (0) to turn on the third PMOS transistor MP3, allowing the voltage V2 at terminal P2 to charge the third capacitor C3. Meanwhile, CLK3, now at low level, causes the additional switch module SWMA to output the voltage V2 (now of the magnitude 2VCC) as the second reference clock signal RCLK2. Accordingly, the voltage V2 at terminal P2 is pulled up from nearly 2CC to nearly 4VCC since RCLK2 is now at nearly 2VCC, which also charges the voltage VOUT at terminal POUT to nearly 4VCC. As is explained below, the power supply is capable of turning off the second PMOS transistor MP2 with the increase of the voltage POUT, and thus the voltage V2 and VOUT are charged to 4VCC.

Next, in the period TL, CLK1 turns back to low, CLK2 stays high, and CLK3 turns to high. This allows the first level shifter LS 1 to turn on the first PMOS, pulling the voltage V1 at terminal P1 back to VCC. Meanwhile, CLK3, now at high level, causes the additional switch module SWMA to output the reference voltage (0) as the RCLK2. With the power supply floated, the second level shifter LS2 outputs a floating voltage, allowing the voltage V2 at terminal P2 to drop from nearly 4VCC to nearly 2VCC due to the decrease of RCLK2 by 2VCC. Similarly, with the power supply floated, the output level shifter LSOUT outputs a floating voltage, allowing the voltage VOUT at terminal POUT to be maintained at 4VCC.

Similar procedures continue, and with the increase of VOUT, the level shifters LS1-LS3 and LSOUT operate normally to turn off the respective PMOS transistors P1, P2 and POUT, generating more stabilized voltage V1, V2 and VOUT, as shown in Fig. 5.

Both the charge pumps 100 and 400' convert the input voltage VIN of magnitude VCC to the output voltage VOUT of magnitude 4VCC. However, since voltage in the second sub-charge pump SCP2 is increased by 2VCC rather than 1VCC, the charge pump 400' contains one less stage and hence one less pumping capacitor than the charge pump 100. This is why the charge pump 100 is called an X4 charge pump and the charge pump 400' is called an X2 (X2) charge pump.

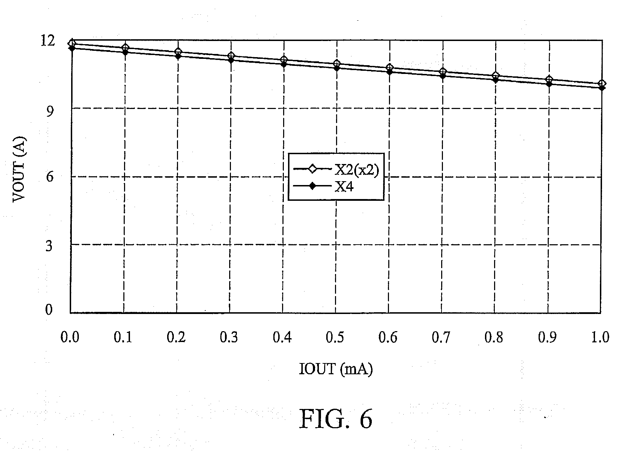

Fig. 6 shows an output voltage comparison between the charge pump 100 (X4) in Fig. 1 and the charge pump 400' (X2(X2)) in Fig. 4B versus different load current IOUT. It is shown that the charge pumps 100 and 400' have nearly the same output voltage in the load current range from about 0 to about 1 mA.

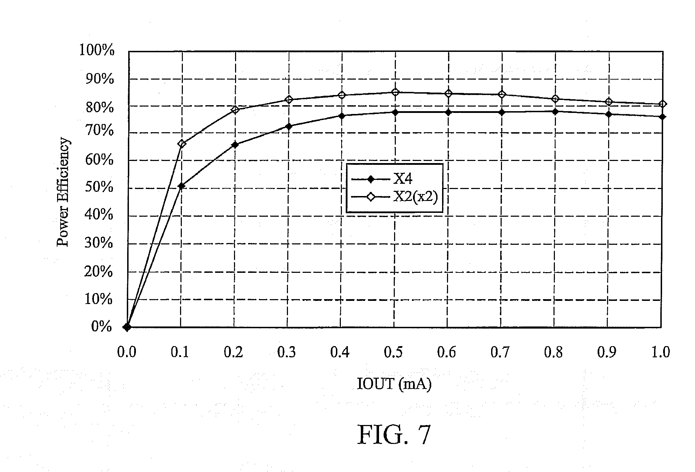

Fig. 7 shows a power efficiency comparison between the charge pump 100 (X4) in Fig. 1 and the charge pump 400' (X2(X2)) in Fig. 4B versus different load current IOUT. It is shown that the charge pump 400' has higher power efficiency than the charge pump 100. This is because the charge pump 400' contains fewer pumping stages and capacitors.

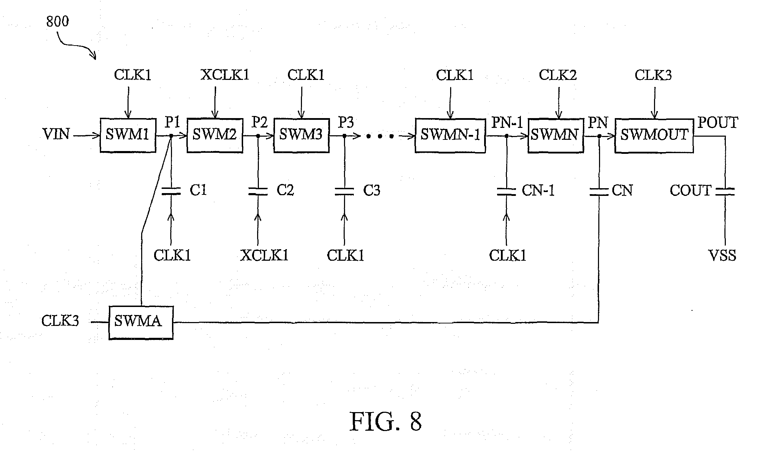

Fig. 8 is a block diagram of an N-stage charge pump in accordance with another embodiment of the invention as an extension of the charge pumps 400 and 400' of Figs. 4A and 4B. As shown in Fig. 8, the only difference in the N-stage charge pump 800 between the charge pumps 400 and 400' is that an even number of sub-charge pumps are inserted in the first and second sub-charge pumps of the charge pump 400. Still, the charging clock signals are low and high to turn on and off respectively the charging switch modules, and the additional clock signal is low and high to drive the additional switch module to output the output voltage at the terminal of the reference-clock-providing sub-charge pump or the reference voltage. As shown in Fig.8, the charging clock signals and reference clock signals of the inserted charge pumps SCP2-SPCN-1 are XCLK1 and CLK1 by turn, while the charging clock signals and reference clock signal of the original charge pumps SCP1, SCPN (SCP2 in charge pump 400 and 400') and MOUT and the additional clock signal of the additional switch module CLK3 keep the same. The timings of CLK1, CLK2 and CLK3 have the same timings as shown in Fig. 5. The operation is similar to the description in Fig. 4B and is not detailed for brevity.

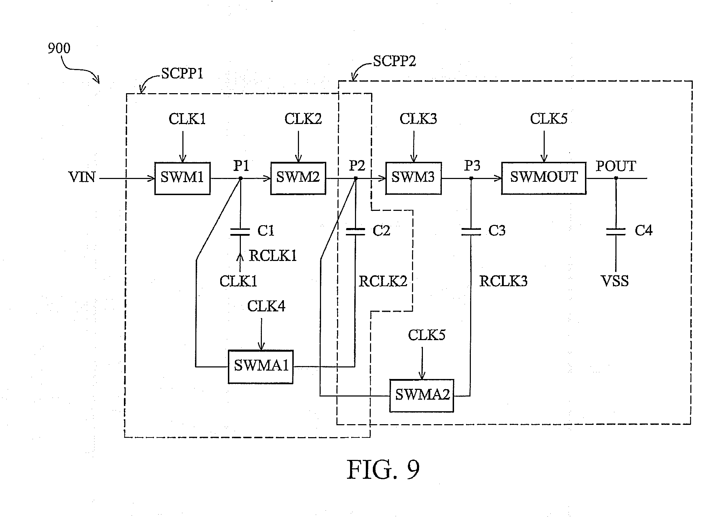

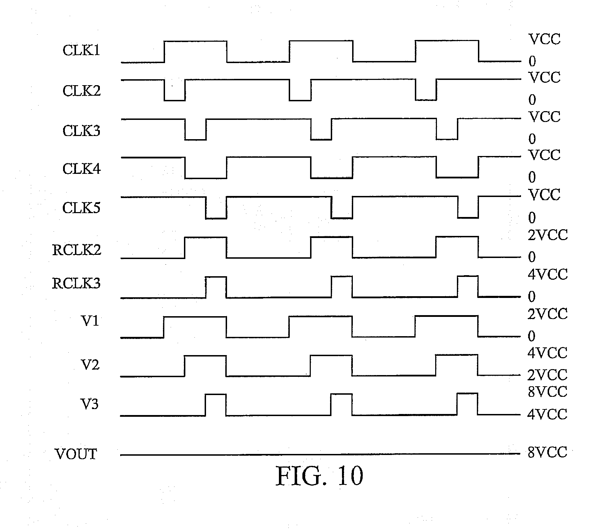

Fig. 9 is a block diagram of a 3-stage charge pump in accordance with another embodiment of the invention as an extension of the charge pumps 400 and 400' of Figs. 4A and 4B. As shown in Fig. 10, a first sub-charge-pump pair SCPP1 comprises charging switch modules SWM1 and SWM2 and a first additional switch module SWM1. Similarly, a second sub-charge-pump pair SCPP2 comprises charging switch modules SWM3 and SWM4 and a second additional switch module SWM2. Both of the sub-charge-pump pairs SCPP1 and SCPP2 have architectures similar to the sub-charge-pump pair including the charging switch modules SWM1 and SWM2 and the additional switch module SWMA in Fig 4A. The only difference in the charge pump 900 between the charge pump 400 and 400' is that the charge pump 900 comprises two sub-charge-pump pairs SCPP1 and SCPP2 rather than one sub-charge pump-pair as the charge pump 400. Still, the charging clock signals are low and high to turn the charging switch module on and off respectively, and the additional clock signal is low and high to drive the additional switch module to provide the output voltage of at the terminal of the reference-clock-providing sub-charge pump or the reference voltage. The charging clock signals of the charging switch modules SWM1 to SWMOUT are CLK1, CLK2, CLK3 and CLK5 respectively, and the additional clock signals of the additional switch module SWMA1 and SWMA2 are CLK4 and CLK5 respectively. The timings of CLK1-CLK5, RCLK2-RCLK3, V1-V3 and VOUT are shown in Fig. 10. Operation is similar to the description in Fig. 4B and is not detailed for brevity.

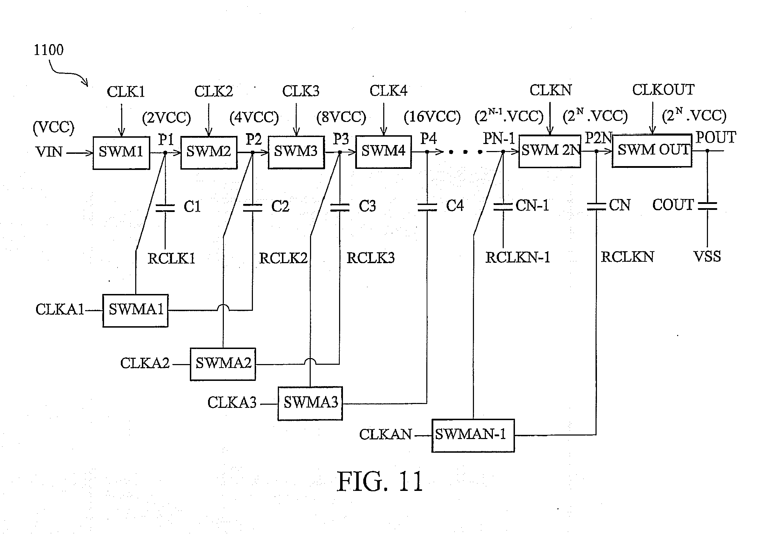

Similarly, the 3-stage charge pump 900 can be further extended to an N-stage charge pump 1100 shown in Fig. 11, which comprises N sub-charge-pumps connected in series. Since the output voltage is double the input voltage in each of the sub-charge pump SCP1-SCPN, the output voltage VOUT is 2^{N}• VCC.

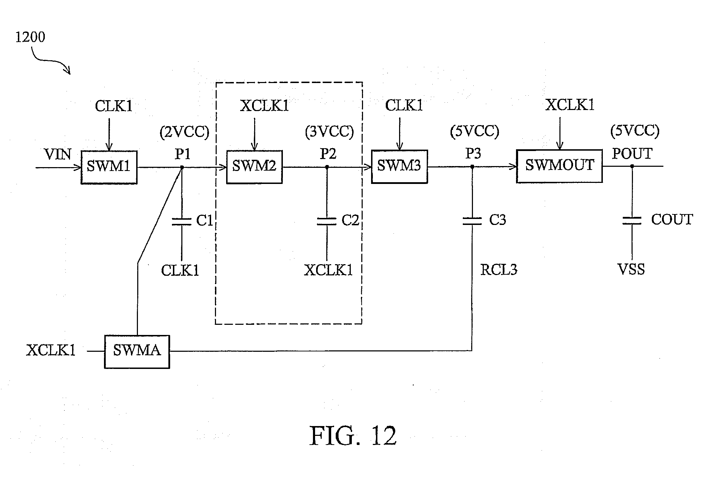

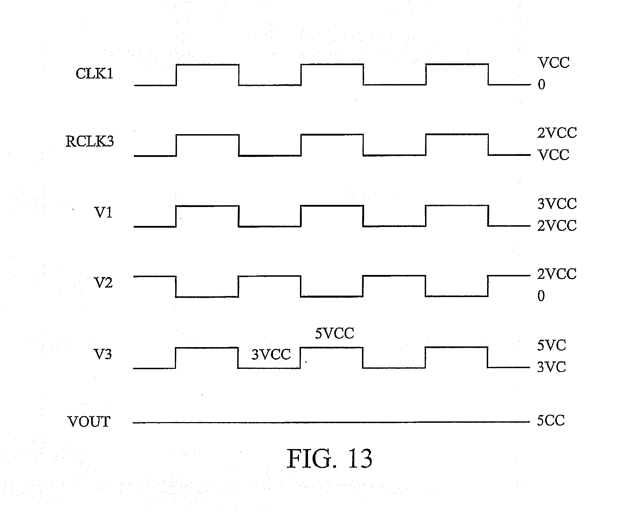

Fig. 12 is a block diagram of a 3-stage charge pump in accordance with another embodiment of the invention as a variation of the charge pump 400 and 400' of Figs. 4A and 4B. As shown in Fig. 12, the only difference in the 3-stage charge pump 1200 between the charges pump 400 and 400' is that one sub-charge pump is inserted in first and second sub-charge pumps SCP1 and SCP2 of the charge pump 400 and 400'. Still, the charging clock signals are low and high to turn the charging switch module on and off respectively, and the additional clock signal is low and high to drive the additional switch module to provide the output voltage at the terminal of the reference-clock-providing sub-charge pump or the reference voltage. In the charge pump 1200, the charging clock signals of the charging switch modules SCP1-SCP3 to MOUT are CLK1 and XCLK1 by turn, the reference clock signals of the charging switch modules SCP1-SCP2 are CLK1 and XCK1 respectively, and the additional clock signal is XCLK1. The timings of CLK1, V1-V3 and VOUT are shown in Fig. 13. Operation is similar to the description in Fig. 4B and is not detailed for brevity.

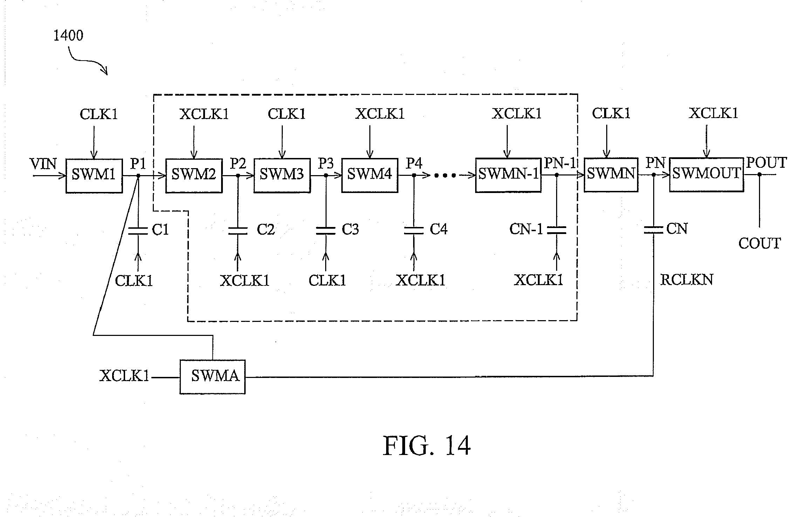

It is noted that the 3-stage charge pump 1200 can be further extended to an N-stage charge pump 1400 as shown in Fig. 14. Referring to charge pumps 400 and 400' in Figs. 4A and 4B and comparing to charge pumps 1400 and 1200, the only difference between charge pump 1400 and charge pump 1200 is that not necessarily only one but any odd number of sub-charge pump(s) can be inserted in the first and second sub-charge pumps SCP1 and SCP2 of the charge pumps 400 and 400'. Similar to the charge pump 1200, the charging clock signals of the charging switch modules SCP1-SCPN to MOUT are CLK1 and XCLK1 by turn, the reference clock signals of the charging switch modules SCP1-SCPN are also CLK1 and XCK1 by turn, and the additional clock signal is XCLK1.

It should be noted that, in all of the charge pumps in Figs. 4A, 4B, 8, 9, 11, 12, and 14, a plurality of sub-charge pumps can be inserted between the switch module of the first sub-charge pump and the input voltage VIN and/or between the charging switch module of the last sub-charge pump and the output charging module of the output module.

With the disposition of the additional switch module, voltage in the reference-clock-accepting sub-charge pump can be increased by the output voltage of the reference-clock-providing sub-charge pump, higher than in conventional technology. Accordingly, at least some charge pump embodiments require fewer pumping capacitors, provide enhanced power efficiency, and reduce external pin requirements and costs especially for COG type panel design.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A charge pump, comprising:
a plurality of sub-charge pumps connected in series, each having an input terminal, an output terminal, and a reference clock terminal, the input terminal of each, except a first of the sub-charge pumps, connecting to the output terminal of an immediately preceding sub-charge pump in the series, the input terminal of the first sub-charge pump acting as an input terminal of the charge pump to receive an input voltage, wherein each of the sub-charge pumps comprises:
a charging switch module coupled between the input terminal and output terminal of the sub-charge pump, operative to be turned on and off according to a charging clock signal; and
a capacitor connected between the output terminal and the reference clock terminal of the sub-charge pump, and operative to receive a reference clock signal through the reference clock terminal; and
at least one additional switch module coupled to the output terminal of a
reference-clock-providing sub-charge pump among the sub-charge pumps,
except a last of the sub-charge pumps in the series, and to the reference
clock terminal of a reference-clock-accepting sub-charge pump among the
sub-charge pumps , to provide a high level of voltage at the output
terminal of the reference-clock-providing sub-charge pump as the high
level of the reference clock signal of the reference-clock-accepting sub-charge pump.

2. The charge pump as claimed in claim 1, wherein the additional switch module is connected between the output terminal of the reference-clock-providing sub-charge pump and a reference voltage, with an output terminal connecting to the reference clock terminal of the reference-clock-accepting sub-charge pump, to provide the voltage at the output terminal of the reference-clock-providing sub-charge pump or the reference voltage as the reference clock signal of the reference-clock-accepting sub-charge pump according to an additional clock signal.

3. The charge pump as claimed in claim 1, wherein
for any of the sub-charge pumps, when the reference clock signal is at low level, there exists one period during which the charging clock signal turns on the charging switch module;
for any of the sub-charge pumps, when the reference clock signal is at high level, the charging clock signal turns off the charging switch module and there exists one period during which the charging clock signal of the next sub-charge pump turns on the charging switch module therein; and
when the reference clock signal of the reference-clock-providing sub-charge pump is at high level, there exists one period during which the additional switch module outputs the voltage at the output terminal of the reference-clock-providing sub-charge pump to the reference clock terminal of the reference-clock-accepting sub-charge pump..

4. The charge pump as claimed in claim 2, wherein
for any of the sub-charge pumps, when the reference clock signal is at low level, there exists one period during which the charging clock signal turns on the charging switch module;
for any of the sub-charge pumps, when the reference clock signal is at high level, the charging clock signal turns off the charging switch module and there exists one period during which the charging clock signal of the next sub-charge pump turns on the charging switch module therein; and
when the reference clock signal of the reference-clock-providing sub-charge pump is at high level, there exists one period during which the additional clock signal drives the additional switch module to output the voltage at the output terminal of the reference-clock-providing sub-charge pump; and
when the reference clock signal of the reference-clock-providing sub-charge pump is at low level, the additional clock signal drives the additional switch module to output the reference voltage.

5. The charge pump in claim 2, wherein the reference-clock-accepting sub-charge pump is located in series next to the reference-clock-providing sub-charge pump.

6. The charge pump in claim 5, wherein the charging clock signal of the reference-clock-providing sub-charge pump, the charging clock signal of the reference-clock-accepting sub-charge pump are a first and second clock signal, respectively,
wherein the reference clock signal is low and high when the charging switch module in the reference-clock-providing sub-charge pump is turned on and off respectively; and
wherein the period of the first clock signal that turns off the charging switch module in the reference-clock-providing sub-charge pump comprises a first and second sub-period,
wherein during the first sub-period,
the second clock signal turns on the charging switch module in the reference-clock-accepting sub-charge pump, and the additional clock signal drives the additional switch module to output the reference voltage;
wherein during the second sub-period,
the second clock signal turns off the charging switch module in the reference-clock-accepting sub-charge pump, and the additional clock signal drives the additional switch module to output the voltage at the output terminal of the reference-clock-providing sub-charge pump; and
wherein when the first clock signal turns on the charging switch module in the reference-clock-providing sub-charge pump, the second clock signal turns off the charging switch module in the reference-clock-accepting sub-charge pump, and the additional clock signal drives the additional switch module to output the reference voltage.

7. The charge pump in claim 5, wherein the charge pump further comprises:
a second reference-clock-accepting sub-charge pump, the input terminal of which connects to the output terminal of the reference-clock-accepting sub-charge pump; and
a second additional switch module, coupled between the output terminal of the reference-clock-accepting sub-charge pump and the reference voltage, with an output terminal connecting to the reference clock terminal of the second reference-clock-accepting sub-charge pump, to provide the voltage at the output terminal of the reference-clock-accepting sub-charge pump or the reference voltage as the reference clock signal of the second reference-clock-accepting sub-charge pump according to an second additional clock signal.

8. The charge pump in claim 7, wherein the charging clock signal of the reference-clock-providing sub-charge pump, the charging clock signal of the reference-clock-accepting sub-charge pump, the charging clock signal of the second reference-clock-accepting sub-charge pump are a first, second, and third clock signal, respectively,
wherein the reference clock signal is low and high when the charging switch module in the reference-clock-providing sub-charge pump is turned on and off respectively; and
wherein the period of the first clock signal turning off the charging switch module in the reference-clock-providing sub-charge pump comprises a first, second, and third sub-period,
wherein during the first sub-period,
the second and third clock signals turn on and off the charging switch modules in the reference-clock-accepting sub-charge pump and the second reference-clock-accepting sub-charge pump respectively, and both the additional clock signal and the second additional clock signal drive the additional switch module and the second additional switch modules to output the reference voltage;
wherein during the second sub-period,
the second and third clock signals turn off and on the charging switch modules in the reference-clock-accepting sub-charge pump and second reference-clock-accepting sub-charge pump respectively, the additional clock signal drives the additional switch module to output the voltage at the output terminal of the reference-clock-providing sub-charge pump, and the second additional clock signal drives the second additional switch module to output the reference voltage; and
wherein during the third sub-period,
both the second and third clock signals turn off the charging switch modules in the reference-clock-accepting sub-charge pump and second reference-clock-accepting sub-charge pump, the additional clock signal drives the additional switch module to output the voltage at the output terminal of the reference-clock-providing sub-charge pump, and the second additional clock signal drives the second additional switch module to output the voltage at the output terminal of the reference-clock-accepting sub-charge pump; and
when the first clock signal turns on the charging switch module in the reference-clock-providing sub-charge pump, both the second and third clock signals turn off the charging switch modules in the reference-clock-accepting sub-charge pump and the second reference-clock-accepting sub-charge pump, and both the additional clock signal and the second additional clock signal drive the additional switch module and the second additional switch modules to output the reference voltage.

9. The charge pump in claim 2, wherein an even number of the sub-charge pumps are connected between the reference-clock-providing sub-charge pump and the reference-clock-accepting sub-charge pump.

10. The charge pump in claim 9, wherein the charging clock signal of the reference-clock-providing sub-charge pump, the charging clock signal of the reference-clock-accepting sub-charge pump are a first and second clock signal, respectively,
wherein the reference clock signal is low and high when the charging switch module in the reference-clock-providing sub-charge pump is turned on and off respectively; and
wherein the charging clock signals of the even number of sub-charge pumps are a first inverted clock signal and the first clock signal by turn, wherein the first inverted clock signal and the first clock signal is of opposite phase;
wherein the reference clock signal of any sub-charge pump among the even number of sub-charge pumps is low and high when the charging switch module in the same sub-charge pump is turned on and off respectively; and
wherein the period of the first clock signal turns off the charging switch module in the reference-clock-providing sub-charge pump comprises a first and second sub-period,
wherein during the first sub-period,
the second clock signal turns on the charging switch module in the reference-clock-accepting sub-charge pump, and the additional clock signal drives the additional switch module to output the reference voltage;
wherein during the second sub-period,
the second clock signal turns off the charging switch module in the reference-clock-accepting sub-charge pump, and the additional clock signal drives the additional switch module to output the voltage at the output terminal of the reference-clock-providing sub-charge pump; and
wherein when the first clock signal turns on the charging switch module in the reference-clock-providing sub-charge pump, the second clock signal turns off the charging switch module in the reference-clock-accepting sub-charge pump, and the additional clock signal drives the additional switch module to output the reference voltage.

11. The charge pump in claim 2, wherein an odd number of sub-charge pumps are connected between the reference-clock-providing sub-charge pump and the reference-clock-accepting sub-charge pump.

12. The charge pump in claim 11, wherein the charging clock signals of the sub-charge pumps from the reference-clock-providing sub-charge pump through the odd number of sub-charge pumps to the reference-clock-accepting sub-charge pump are a first clock signal and a first inverted clock signal by turn, wherein the first clock signal and the first inverted clock signal are of opposite phase ;
wherein the additional switch module provides the reference voltage and the voltage at the output terminal of the reference-clock-providing sub-charge pump when the charging switch module in the reference-clock-providing sub-charge pump is turned on and off respectively; and
wherein the reference clock signal is low and high when the charging switch module in the reference-clock-providing sub-charge pump is turned on and off respectively; and
wherein the reference clock signal of any sub-charge pump among the odd number of sub-charge pumps is low and high when the charging switch module in the same sub-charge pump is turned on and off respectively.

13. The charge pump in claim 2, wherein the additional switch module is a level shifter powered by the voltage at the output terminal of the reference-clock-providing sub-charge pump.

14. The charge pump in claim 1, further comprising an output module to covert the voltage at the output terminal of the last sub-charge pump to a DC voltage.

15. The charge pump in claim 14, wherein the output module comprises:
an output capacitor, with a first end connecting to a reference voltage; and
an output charging switch module having an input terminal connecting to the output terminal of the last sub-charge pumps and an output terminal connecting to a second end of the output capacitor to serve as an output terminal of the charge pump, turned on or off according to an output charging clock signal.

16. The charge pump in claim 15, wherein the output charging clock signal turns on and off the output charging switch module when the reference clock signal of the last sub-charge pump is high and low, respectively.

17. The charge pump in claim 15, wherein the charge switch module of each of the sub-charge pumps comprises:
a switch coupled between the input and output terminals of the sub-charge pump; and
a sub-switch module, coupled between the output terminal of the charge pump and the reference voltage, to provide the voltage at the output terminal of the charge pump or the reference voltage according to the charging clock signal to control the switch;
wherein the output charge switch module of the output module comprises:
an output switch coupled between the input and output terminals of the output charging switch module; and
an output sub-switch module, coupled between the output terminal of the output charging switch module and the reference voltage, to provide the voltage at the output terminal of the charge pump or the reference voltage according to the output charging clock signal to control the output switch.

18. The charge pump in claim 17, wherein the sub-switch module and the output sub-switch module are level shifters powered by the voltage at the output terminal of the charge pump.

19. The charge pump in claim 17, wherein the switch and the output switch are PMOS or NMOS transistors.

20. A charge pump, comprising:
a first, second, and third PMOS transistor connected in series;
a first, second, and third level shifter, each connected between an output terminal of the charge pump and a reference voltage, receiving first, second and third clock signals to control the first, second and third PMOS transistors, respectively;
a first, second, and third capacitor, the first capacitor having a first end connecting to the first clock signal and a second end connecting to the terminal at which the first and second PMOS transistors are connected, the second capacitor having a second end connecting to the terminal at which the second and third PMOS transistors are connected, and third capacitor having a first end connecting to the reference voltage and a second end connecting to the third PMOS transistor to act as the output terminal of the charge pump; and
an additional level shifter, connected between the second end of the first capacitor and the reference voltage, receiving a third inverted clock signal of opposite phase to the third clock signal to control the voltage at a first end of the second capacitor.

21. The charge pump in claim 20,
wherein the period of the first clock signal is at a first level comprises a first and second sub-period,
wherein during the first sub-period, the second and third clock signals are at a second and a first level respectively;
wherein during the second sub-period, the second and third clock signals are at a first and a second level respectively;
wherein when the first clock signal is at a second level, both the second and third clock signals are at the first level.

22. A charge pump, comprising:
a first sub-charge pump having a first output terminal and being operative to receive an input voltage such that the first sub-charge pump operates as an input terminal for the charge pump;
a second sub-charge pump having a second input terminal, a second reference clock terminal and a second output terminal, the second input terminal being connected in series with the first output terminal;
a third sub-charge pump having a third input terminal, a third reference clock terminal and a third output terminal, the third input terminal being connected in series with the second output terminal; and
a switch module coupled to the second output terminal and to the third reference clock terminal such that a voltage provided at the second output terminal is provided as reference clock signal of the third sub-charge pump.
